Europäisches Patentamt

European Patent Office

Office européen des brevets

(19)

(11) Veröffentlichungsnummer: **0 113 800**
**B1**

(12) # EUROPÄISCHE PATENTSCHRIFT

(45) Veröffentlichungstag der Patentschrift:
**22.07.87**

(21) Anmeldenummer: **83107207.9**

(22) Anmeldetag: **22.07.83**

(51) Int. Cl.⁴: **C 08 G 63/66,** C 08 G 63/20, C 09 D 3/64, C 08 G 63/48, C 08 G 63/42

(54) **Polyol-modifizierte Alkydharze zur Verwendung in Wasserlacken.**

(30) Priorität: **16.12.82 DE 3246616**

(43) Veröffentlichungstag der Anmeldung:
**25.07.84 Patentblatt 84/30**

(45) Bekanntmachung des Hinweises auf die Patenterteilung:
**22.07.87 Patentblatt 87/30**

(84) Benannte Vertragsstaaten:
**AT BE CH DE FR GB IT LI NL SE**

(56) Entgegenhaltungen:
**DE-A-2 802 305
DE-A-2 842 919
FR-A-1 386 701
US-A-2 572 085**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien, Postfach 1100 Henkelstrasse 67, D-4000 Düsseldorf- Holthausen (DE)**

(72) Erfinder: **Wilk, Hans- Christoph, Dr., An der Obererft 94, D-4040 Neuss (DE)**
Erfinder: **Wegemund, Bend, Dr., Händelweg 3, D-5657 Haan (DE)**
Erfinder: **Gorzinski, Manfred, Bogenstrasse 6, D-4000 Düsseldorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 113 800 B1

LIBER, STOCKHOLM 1987

## Beschreibung

Die Erfindung liegt auf dem Gebiet der Lackbindemittel. Sie schlägt neue Alkydharze bzw. Alkydharzgemische zur Verwendung in ofentrocknenden Wasserlacken vor.

In den letzten Jahren gab es zahlreiche Bemühungen, ofentrocknende Lacke zu schaffen, die beim Einbrennen möglichst wenig flüchtige, die Atmosphäre verunreinigende Substanzen abgeben. So wurde zum Beispiel vielfach vorgeschlagen, carboxylgruppenhaltige Alkydharze als Bindemittel zu verwenden, welche nach Neutralisation mit Aminen in wässrigen Lösungsmittelgemischen gelöst werden können. Hierfür geeignete Alkydharze weisen meist Säurezahlen zwischen 40 und 80 mg KOH/g auf. Bekannt ist weiterhin die Verwendung von Alkydharzdispersionen, welche Säurezahlen < 30 mg KOH/g oder auch < 10 mg KOH/g aufweisen, aber Emulgiermittel enthalten.

Bekannt sind schließlich Alkydharzmikroemulsionen, welche Säurezahlen zwischen 5 und 35 haben, jedoch keine flüchtigen Lösungsmittel und nur solche Emulgatoren enthalten, die beim Einbrennen ihre Hydrophilie verlieren. So werden in der deutschen Patentschrift 28 42 919 Alkydharze vorgeschlagen, welche durch Umsetzung freier Carboxylgruppen mit Glycid zahlreiche 2,3-Dihydroxypropyl-gruppen enthalten. Durch Auswahl geeigneter Amine, Emulgatoren und Vernetzungsmittel - meist Melaminharze - lassen sich aus den genannten Alkydharzen optisch klare wässrige Zubereitungen (Mikroemulsionen) herstellen, welche beim Einbrennen praktisch keine schädlichen Bestandteile an die Atmosphäre abgeben.

Im französischen Patent FR-A-1 386 701 werden Alkydharze zur Verwendung in Wasserlacken beschrieben, die Säurezahlen zwischen 40 und ungefähr 95 aufweisen und als Polyole, Polyetherpolyole mit mindestens 3 OH-Gruppen und einem Molgewicht zwischen 1100 und 2500 enthalten. Wenngleich hier die Verwendung trifunktioneller Polyetherpolyole in Alkydharzen bereits vorgeschlagen wird, so ist doch aufgrund des hohen Molekulargewichts, das zu Schwierigkeiten bei der Einkondensation führt, und die Wasserfestigkeit vermindert, wie auch aufgrund der hohen Säurezahl keine befriedigende technische Lösung geboten, da so hergestellte Lacke beim Einbrennen Überzüge liefern, die den heutigen Anforderungen an die Wasserfestigkeit nicht mehr entsprechen.

Wenngleich diese Alkydharze hinsichtlich der Verarbeitbarkeit zu Wasserlacken und aus Umweltüberlegungen weitestgehend den Anforderungen entsprechen, so bestand doch ein Bedürfnis, die technischen Eigenschaften von daraus herstellbaren Lackfilmen zu verbessern. So sollte unter Beibehaltung der übrigen günstigen technischen Eigenschaften die Wasserfestigkeit - zu ermitteln im Schwitzkastentest - sowie die Flexibilität der Lackfilme bei großer Härte erhöht werden.

Zur Erhöhung der Flexibilität von Alkydharzlacken ist es aus der US-PS 40 39 495 bekannt, Trimethylolnitromethan als Additiv zu verwenden. Dieses sehr hydrophile Additiv vermindert jedoch die Wasserbeständigkeit der Lackfilme erheblich. Auch Versuche durch Erhöhung des Fettsäureanteils in den Alkydharzen zu flexiblen Lacken zu gelangen, führten nicht zum Ziel, da derartige Harze nicht lösungsmittelfrei zu Wasserlacken konfektionierbar waren.

Es ist somit Aufgabe der Erfindung, ein Alkydharz bereitzustellen, welches sich insbesondere nach Neutralisation zu Wasserlacken verarbeiten läßt, die beim Einbrennen harte Überzüge mit verbesserter Flexibilität bei gleichzeitig verbesserter Wasserfestigkeit ergeben. Insbesondere ist es Aufgabe der Erfindung, Alkydharze mit Säurezahl zwischen 5 und 35 mg KOH/g und einem Gehalt an 2,3-Dihydroxypropylgruppen, wie sie z. B. in der deutschen Patentschrift 28 42 919 beschrieben werden, hinsichtlich Flexibilität bei hoher Härte und gleichzeitig hinsichtlich Wasserfestigkeit zu verbessern und dabei deren übrige günstige technische Eigenschaften zu wahren. So sollten die neuen Harze ohne die zwingende Mitverwendung flüchtiger Lösungsmittel oder das Einbrennen überdauernder Emulgatoren zu Wasserlacken, insbesondere für das Auge klaren Wasserlacken konfektionierbar sein.

Gegenstand der Erfindung sind somit Alkydharzgemische zur Verwendung in ofentrocknenden Wasserlacken, hergestellt aus mehrwertigen Carbonsäuren bzw. ihren reaktiven Derivaten und mehrwertigen Alkoholen, gewünschtenfalls unter Mitverwendung einwertiger Modifizierungsmittel, dadurch gekennzeichnet, daß sie als mehrwertige Hydroxylverbindungen wenigstens anteilsweise Polyetherpolyole und/oder Polyesterpolyole eines mittleren Molgewichts von 300 bis 800 g/mol enthalten, die mit einer mittleren OH-Funktionalität größer 2 endständige Gruppen der Formel - CHR - OH aufweisen, in der R = - H und/oder - CH$_3$ ist, und daß die Harze eine Säurezahl zwischen 5 und 40 haben.

Ein weiterer Gegenstand der Erfindung sind Abwandlungen dieser Alkydharzgemische, dadurch gekennzeichnet, daß sie die Polyetherpolyole und/oder Polyesterpolyole des mittleren Molgewichts 300 bis 800 g/mol, die mit einer mittleren OH-Funktionalität größer 2 endständige Gruppen der Formel - CHR - OH (R = H und/oder CH$_3$) aufweisen, in Abmischung mit konventionellen Alkydharzen enthalten, wobei der Gehalt an beigemischten Polyolen 5 - 30 Gew.-% der Gesamtmischung ausmacht.

In einer ersten Ausführungsform der Erfindung werden Polyetherpolyole verwendet, wobei solche bevorzugt sind, welche mehr als 2 und bis zu 4 endständige OH-Gruppen im Sinne der erfindungsgemäßen Definition im Mittel aufweisen. Polyetherpolyole sind ansich wohl bekannt. Sie werden z. B. bei der Herstellung von Polyurethanen eingesetzt, wobei sie, wenn sie mehr als 2 Hydroxylgruppen im Mittel aufweisen, zu einer Vernetzung und damit zumindest bei hohen Vernetzungsgraden zur Versprödung führen. Es war daher für den Alkydharz-Fachmann überraschend, daß Polyetherpolyole mit mehr als 2 und bis zu 4 endständigen Hydroxylgruppen geeignete Rohstoffe zur Herstellung flexibler Lacke sind, wenn man sie anstelle von z. B. Diolen in die Harze einkondensiert.

Erfindungsgemäß sind Polyetherpolyole mit Molgewichten zwischen 300 und 800 und insbesondere zwischen 300 und 600 geeignet. Bei geringeren Molgewichten läßt der Effekt der Flexibilisierung nach. Bei höheren Molgewichten wird mitunter die Verbesserung der Wasserfestigkeit nicht erreicht. Es wird angestrebt, daß die Polyetherpolyole so aufgebaut sind, daß die Hydroxylgruppen möglichst weit voneinander entfernt sind. Vorzugsweise sind die Polyetherpolyole so aufgebaut, daß die längste im Molekül vorhandene Kette endständige Hydroxylgruppen im Sinne der erfindungsgemäßen Definition an beiden Enden aufweist.

Es ist bevorzugt, Polyetherpolyole mit 2 oder sogar mehr als 2 endständigen primären Hydroxylgruppen zu verwenden. Andererseits liefern aber auch Polyetherpolyole, die wenigstens anteilsweise endständige sekundäre Hydroxylgruppen aufweisen und insbesondere solche mit einer bis zu 4 endständigen sekundären Hydroxylgruppen günstige Ergebnisse, vorausgesetzt, daß sie den obigen Mindestanforderungen entsprechen.

Wenngleich die erfindungsgemäßen Polyetherpolyole hauptsächlich verzweigte Verbindungen sind, sind auch solche linearen Polyole geeignet, die außer den endständigen Hydroxylgruppen noch eine oder zwei innenständige Hydroxylgruppen tragen.

Im einzelnen lassen sich die erfindungsgemäß verwendbaren Polyetherpolyole am besten durch ihre Herstellung beschreiben.

So erhält man im Sinne der Erfindung brauchbare Polyetherpolyole, wenn man niedermolekulare, trifunktionelle Alkohole mit 3 - 6 C-Atomen, wie z. B. Glycerin, Trimethylolethan oder Trimethylolpropan oder tetrafunktionelle Alkohole, wie Pentaerythrit oder Di-(trimethylolpropan), katalytisch mit cyclischen Ethern mit 2-4 C-Atomen, wie Ethylenoxid, Propylenoxid, Butenoxid, Isobutenoxid oder Tetrahydrofuran umsetzt. Um Molgewichte zwischen 200 und 2000 zu erzielen, wird ein Verhältnis mehrfunktioneller Alkohol zu cyclischem Ether zwischen etwa 1 : 3 und etwa 1 : 40 eingestellt.

Nach einer weiteren Ausführungsform der Erfindung können neben oder anstelle von Polyetherpolyolen entsprechende Polyesterpolyole mit mehr als 2 und insbesondere bis zu 4 Hydroxylgruppen eingesetzt werden. Derartige Polyesterpolyole lassen sich herstellen, indem man in bekannter Weise die vorgenannten niedermolekularen alkohole mit Caprolacton oder dessen höheren Homologen zur Reaktion bringt. Bevorzugte Polyesterpolyole sind die Umsetzungsprodukte von Glycerin, Trimethylolethan, Trimethylolpropan oder Pentaerythrit mit 3 - 6 mol Caprolacton.

Erfindungsgemäß können auf Basis der Polyetherpolyole und/oder Polyesterpolyole Alkydharze mit unterschiedlicher Modifzierung hergestellt werden. Unter Modifizierung wird hier die Mitverwendung monofunktioneller oder monofunktionell reagierender Rohstoffe verwendet. So können Alkydharze hergestellt werden, die mit Fettsäuren modifiziert sind, mit langkettigen Alkenoxiden modifiziert sind oder mit Fettalkoholen modifiziert sind. Dabei werden die Modifizierungsmittel gewöhnlich in Mengen zwischen 5 und 40 Gew.-% eingesetzt.

Geeignete Fettsäuren, die in den polyether- und/oder polyesterpolyolhaltigen Alkydharzen verwendet werden können, sind Schnitte natürlicher Fettsäuren, d.h. die Verseifungsprodukte natürlich vorkommender Öle und Fette oder von deren Gemischen. Derartige natürliche Fettsäuren sind unverzweigt und naturlich vorkommender Öle und Fette oder von deren Gemischen. Derartige natürliche Fettsäuren sind unverzweigt und weisen eine gerade Anzahl von Kohlenstoffatomen zwischen 8 und 22, vorzugsweise zwischen 12 und 18 auf. Sie können weiterhin eine oder mehrere Doppelbindungen aufweisen. Geeignet sind beispielsweise Fettsäureschnitte aus Kokosöl, Sojaöl, Sonnenblumenöl, Erdnußöl oder aus tierischen Fetten wie z. B. Talg.

Geeignete Olefinoxide, die zusammen mit den Polyolen in Alkydharzen verwendet werden können, haben 8 bis 20 Kohlenstoffatome oder auch bis 22 Kohlenstoffatome. Hier können sowohl Olefinoxide mit innenständiger als auch mit endständiger Epoxidgruppe verwendet werden sowie deren Gemische. Weiterhin können lineare wie auch verzweigte Produkte verwendet werden. Die Olefinoxide werden ebenfalls in Mengen zwischen 5 und 40 Gew.-% eingesetzt. Dabei kann es bevorzugt sein, diese Produkte in einer Vorreaktion oder auch während der Kondensation mit mehrfunktionellen Carbonsäuren, insbesondere Dicarbonsäuren zu Monoestern der Säuren umzusetzen und diese Produkte in gleichen Mol-Mengen, wie Fettsäuren, einzusetzen. Die Verwendung von Olefinoxiden in Alkydharzen ist im Prinzip bekannt. Sie wird z. B. in den deutschen Offenlegungsschriften 26 20726 sowie 28 15 096 beschrieben.

Weiterhin können auf Basis der Polyetherpolyole und/oder Polyesterpolyole erfindungsgemäße Alkydharze hergestellt werden, die langkettige Alkohole als Modifizierungsmittel enthalten. Geeignete langkettige Alkohole sind die Reduktionsprodukte natürlicher Fettsäureester. Derartige Fettalkohole weisen 8 - 22, vorzugsweise 12 - 18 C-Atome auf. In der Praxis sind jedoch alkoholmodifizierte Alkydharze weniger gebräuchlich.

Außer den genannten können auch verzweigte, mehrfunktionelle Carbonsäuren als Modifizierungsmittel eingesetzt werden. Bevorzugt sind verzweigte synthetische Fettsäuren sowie die Isononansäure.

Die erfindungsgemäßen modifizierten polyolhaltigen Alkydharze können nach dem allgemeinen Fachwissen auf dem angesprochenen Arbeitsgebiet (beschrieben z. B. in dem Buch "Waterborne Coatings" von Charles R. Martens, Van Nostrand Reinhold Co., New York, 1981) mit unterschiedlichem Aufbau und insbesondere unterschiedlichen Endgruppen hergestellt werden. Bevorzugt sind polyolhaltige Alkydharze, die eine ausreichende Anzahl hydrophiler Endgruppen enthalten, um als Wasserlacke konfektioniert werden zu können.

So betrifft die Erfindung modifizierte Alkydharze mit einer Säurezahl zwischen 5 und 40, vorzugsweise 15 und 30 und insbesondere 20 bis 25 und einer OH-Zahl größer 100 mg KOH/g insbesondere aber größer 200 mg KOH/g. Derartige Alkydharze sind sowohl aufgrund ihrer salzbildenden Gruppen als auch aufgrund ihrer zahlreichen OH-Gruppen zu Wasserlacken konfektionierbar. Ihre technischen Eigenschaften werden durch die erfindungsgemäße Mitverwendung der Polyole, insbesondere der Polyetherpolyole und/oder der Polyesterpolyole besonders verbessert. Bevorzugte Modifizierungsmittel sind Schnitte gesättigter oder ungesättigter natürlicher Fettsäuren in Mengen von 5 bis 40 Gew.-%, vorzugsweise 10 bis 30 Gew.-%, bezogen auf Alkydharz sowie entsprechender Mengen an $\alpha$-Olefinoxiden.

Zur Herstellung der erfindungsgemäßen Alkydharzgemische werden in einer ersten Ausführungsform die erfindungsgemäß definierten Polyole mit anderen in Alkydharzen gebräuchlichen Rohstoffen einer Kondensation bei Temperaturen von knapp über 100 bis zu 250°C unterworfen. Dabei werden aliphatische Dicarbonsäuren wie Adipinsäure, Sebacinsäure, Glutarsäure, Bernsteinsäure, Maleinsäure oder Fumarsäure, aromatische Dicarbonsäuren wie Phthalsäure und/oder deren Isomere, Tricarbonsäuren wie Trimellitsäure und gegebenenfalls konventionellen polyfunktionellen Alkoholen, wie Ethylenglykol, Propylenglykol, Glycerin, Trimethylolethan, Trimethylolpropan oder Pentaerythrit und gegebenenfalls monofunktionellen Modifizierungsmitteln zusammen mit den erfindungsgemäß definierten Polyolen kondensiert.

Anstelle der genannten Carbonsäuren können auch deren reaktive Derivate eingesetzt werden. Unter reaktiven Derivaten von Carbonsäuren seien hier insbesondere deren Anhydride verstanden. So wird der Fachmann Maleinsäure, Phthalsäure und/oder Trimellitsäure, vorzugsweise als Anhydrid bzw. Teilanhydrid einsetzen. Weitere reaktive Derivate von Carbonsäuren sind deren Ester insbesondere die Ester mit monofunktionellen leichtflüchtigen Alkoholen, beispielsweise die Methyl- oder Ethylester.

Die erfindungsgemäß definierten Polyole können in Mengen von 5 bis 60 Gew.-%, bezogen auf Alkydharz, eingesetzt werden. Vorzugsweise werden 5 bis 30 Gew.-%, insbesondere aber 5 bis 25 Gew.-8 und häufig 10 bis 20 Gew.-%, bezogen auf Gesamtharz eingesetzt. Dabei ist es in vielen Fällen zweckmäßig, einen üblichen niedermolekularen mehrfunktionellen Alkohol, etwa Glycerin oder Trimethylolpropan, in äquivalenten Mengen durch die erfindungsgemäß definierten Polyole zu ersetzen.

Was das Kondensationsverfahren und damit den Aufbau der erfindungsgemäßen Alkydharze angeht, so können die Polyole sowohl in einer einstufigen Kondensationsreaktion wie auch in einer mehrstufigen Kondensation eingebaut werden. Dabei bietet die Mehrstufenkondensation den Vorteil eines gezielteren Moleküaufbaus. Es ist beispielsweise möglich, die erfindungsgemäß definierten Polyole als solche oder im Gemisch mit anderen Hydroxylgruppen enthaltenden Komponenten, zunächst mit den zur Modifizierung verwendeten Carbonsäuren, also insbesondere Fettsäuren bis zur vollständigen Veresterung derselben umzusetzen und an das so entstandene Harz neue Bestandteile, etwa Dicarbonsäuren oder Dicarbonsäuren und Hydroxyverbindungen anzukondensieren, bis die gewünschten Kennzahlen, also eine Säurezahl im Bereich zwischen 5 und 40, vorzugsweise zwischen 15 und 20 und eine hinreichend hohe OH-Zahl, beispielsweise größer 100 mg KOH/g oder größer 200 mg KOH/g, erreicht ist. Im einzelnen sei hier auf das allgemeine Fachwissen auf dem Alkydharzgebiet verwiesen.

Nach einer besonders bevorzugten Ausführungsform der Erfindung wandelt man ein Harz nach der Lehre der deutschen Patentschrift 28 42 919 durch molmäßigen Austausch einer Dihydroxy- oder Trihydroxyverbindung gegen ein Polyetherpolyol oder Polyesterpolyol der erfindungsgemäßen Definition ab. Hierzu werden 5 - 60 Gew.-%, bezogen auf Gesamtharz, vorzugsweise jedoch nur 5 bis 25 Gew.-%, bezogen auf Gesamtharz, Polyol zusammen mit gegebenenfalls weiteren Hydroxyverbindungen, Fettsäuren, Dicarbonsäuren wie Adipinsäure und/oder Phthalsäure, Tricarbonsäuren wie Trimellitsäure unter wasserabspaltenden Bedingungen kondensiert bis ein Harz mit einer Säurezahl zwischen 30 und 180, vorzugsweise 60 bis 100, entstanden ist. Sodann wird durch Zugabe von Glycid verestert, bis eine Säurezahl zwischen 5 und 35 mg KOH/g erreicht ist. Die so hergestellten Alkydharze lassen sich in Gegenwart von Neutralisationsmitteln und Emulgatoren, welche beim Einbrennen ihre Hydrophilie zumindest teilweise verlieren, zu lösungsmittelfreien, für das Auge klaren wässrigen Alkydharzzubereitungen (Mikroemulsionen) konfektionieren.

Flexibilität und Wasserfestigkeit von Überzügen auf Basis von Alkydharzwasserlacken lassen sich nicht nur durch Einkondensieren der erfindungsgemäß definierten Polyole in Alkydharzgemische erreichen sondern auch durch nachträgliche Zugabe. Zwar wird dieser Effekt nicht völlig verstanden, doch wird vermutet, daß unter Einbrennbedingungen der Einbau der Polyole in die Harzmoleküle stattfindet, so daß sich Überzüge aus Harzen, die das Polyol einkondensiert enthalten und Überzüge aus Harzen, die das Polyol zugemischt enthalten, letztendlich höchstens geringfügig unterscheiden. Die Erfindung betrifft deshalb in einer weiteren Ausführungsform Mischungen aus bekannten Alkydharzen und den erfindungsgemäß definierten Polyolen mit einem Polyolanteil von 5 - 30 Gew.-%, bezogen auf Mischung. Es ist bevorzugt, nicht mehr als 20 Gew.-% Polyol, bezogen auf Mischung, einzusetzen.

Die erfindungsgemäßen Alkydharzgemische werden vorzugsweise zu Wasserlacken konfektioniert. Hierzu werden sie unter Zuhilfenahme üblicher Hilfsmittel wie Emulgatoren, Neutralisationsmittel und gewünschtenfalls Hilfslösungsmittel zu wässrigen Zubereitungen verarbeitet.

Es ist jedoch besonders bevorzugt, auf Hilfslösungsmittel zu verzichten. Weiterhin ist es besonders bevorzugt, solche Emulgatoren zu verwenden, die unter Einbrennbedingungen ihre Hydrophilie zumindest teilweise verlieren. Derartige Emulgatoren können so aufgebaut sein, daß sie eine unter Einbrennbedingungen zerfallende hydrophile Gruppe aufweisen. Geeignete Emulgatoren dieser Klasse sind z. B. Aminoxide. Andererseits sind aber auch Emulgatoren geeignet, die unter Einbrennbedingungen über Hydroxylgruppen in das Harz eingebaut werden. Geeignet sind aus dieser Klasse insbesondere die Additionsprodukte von Glycid an Fettalkohole oder Alkylphenole. So werden günstige Ergebnisse mit den Umsetzungsprodukten von Nonylphenol mit 6 - 10 mol Glycid erhalten.

Es ist weiterhin besonders bevorzugt, solche Neutralisationsmittel auszuwählen, die unter

# 0 113 800

Einbrennbedingungen nicht flüchtig sind, in das Harz eingebaut werden, aber nicht zu nachteiligen Veränderungen wie z. B. Verfärbungen führen. Geeignete Neutralisationsmittel sind insbesondere Aminoalkohole und unter diesen Aminoalkohole, welche 2,3-Dihydroxypropylgruppen am Stickstoff tragen. Die Herstellung solcher Aminoalkohole durch Einwirkung von Glycid auf primäre oder sekundäre Amine ist in der deutschen Patentschrift 28 45 539 beschrieben. Besonders geeignet sind z. B. die Umsetzungsprodukte von je 2 mol Glycid mit 1 mol Methylamin, Ethylamin, Propylamin und/oder 2-Methyl-2-aminopropanol oder Diethanolamin umgesetzt mit 1 mol Glycid. Weitere geeignete Aminoalkohole sind die aus der britischen Patentschrift 10 03 326 bekannten Verbindungen mit innenständiger primärer Aminogruppe wie z. B. 2-Aminopropandiol oder Tris-(methylol)aminomethan, ("Tris").

Die wäßrigen Zubereitungen der erfindungsgemäßen Alkydharze enthalten das Harz in Mengen von 20 - 60 Gew.-%. Sie sind je nach Hydrophilie kolloidale Lösungen oder Dispersionen (Mikroemulsionen). Sie können mit üblichen Zusätzen zu Wasserlacken weiterverarbeitet werden. Es sei hier auf die entsprechenden Kapitel in dem eingangs erwähnten Buch von Charles R. Martens verwiesen. Um ofentrocknende Wasserlacke zu erhalten, werden vernetzende Harzkomponenten zugegeben. Geeignet sind hier insbesondere sogenannte Aminoharze und unter diesen Umsetzungsprodukte des Melamins insbesondere Hexamethylolmelaminhexaalkylether. Besonders bevorzugt sind solche Aminoharze, die ihrerseits als lösungsmittelfreie oder zumindest lösungsmittelarme oder wässrige Zubereitung vorliegen. Dem Fachmann ist eine Vielzahl entsprechender Marktprodukte bekannt.

Wasserlacke auf Basis der erfindungsgemäßen Alkydharze können nach herkömmlichen Methoden pigmentiert werden. Im einzelnen sei hier auf das allgemeine Fachwissen des mit Wasserlacken vertrauten Lacktechnikers verwiesen, insbesondere was Auswahl von Pigmenten und weiteren Hilfsmitteln betrifft. Das Einbrennen der Lackfilme erfolgt-gewünschtenfalls nach einer Vortrocknung-bei Temperaturen zwischen 120 und 180°C je nach verwendetem Aminharz in geeigneten Trockenöfen bzw. Trockenkanälen. In diesem Zusammenhang wird besonders auf die Vorteile hingewiesen, die durch den vollständigen Verzicht auf organische Hilfslösungsmittel und gewünschtenfalls auf flüchtige Amine gegeben sind.

Die Lacke können zum Überziehen der verschiedensten Materialien wie Glas oder Metall, z. B. Aluminium, Eisen, Stahl und dergleichen mehr verwendet werden. Die entsprechend eingebrannten Überzüge zeichnen sich durch eine hohe Flexibilität auch bei harter Einstellung, gute Werte für Metallhaftung (auch pigmentiert), Hochglanz- und erhöhte Schwitzwasserbeständigkeit aus. Sie sind sowohl in herkömmlichen Emulsionen als auch bisher bekannten Alkydharzen hoher Säurezahl deutlich überlegen. Erfindungsgemäße Alkydharze mit Säurezahlen zwischen 5 und 35 und OH-Zahlen > 100 erreichen bzw. übertreffen teilweise den Qualitätsstandard der Alkydharze wie sie aus Lösungsmitteln eingesetzt bzw. aufgebracht werden.

## Beispiele

### Beispiel 1

Herstellung eines 2,3-Dihydroxypropylgruppen enthaltenden Alkydharzes

Die Kondensation erfolgte in einer heizbaren Veresterungsapparatur, in üblicher Weise unter Stickstoff. Die Komponenten für die erste Stufe wurden gemeinsam bzw. schrittweise unter Zusatz von 4,00 kg Xylol bis zur gewünschten Säurezahl erhitzt.

Es wurden kondensiert:

| | |
|---|---|
| 6,16 kg | fraktionierte Fettsäuren (Kettenlängenverteilung: |
| | 60 Gew.-% Caprylsäure |
| | 35 Gew.-% Caprinsäure |
| | 3 Gew.-% Laurinsäure |
| | 2 Gew.-% höhere Fettsäuren) |

| | |
|---|---|
| 2,28 kg | Glycerin |
| 7,45 kg | Umsetzungsprodukt von 1 mol Trimethylolpropan mit 6 mol Propylenoxid |
| 11,08 kg | Neopentylglykol |
| 9,88 kg | Phthalsäureanhydrid |
| 7,68 kg | Trimellitsäureanhydrid |

Reaktionszeit: 4 Stunden

Reaktionstemperatur: Maximal 190°C

Säurezahl: 70 - 80, gemessen 71,8

Es wurden 2,25 kg Wasser abgeschieden und das Xylol durch Destillation im Vakuum entfernt.

5

# 0 113 800

In einem zweiten Reaktionsschritt wurden zur Reaktion gebracht:

| 40,99 kg | Alkydharz (Produkt 1, Säurezahl 71,8) |
|---|---|
| 2,64 kg | Glycid |
| 1,20 kg | einer 50 %igen wässrigen Lösung Glycerylamin |
| | (Addukt aus 1 Mol 2-Amino-2-methylpropanol und |
| | 2 Mol Glycid) |

Reaktionszeit: 90 Minuten
Reaktionstemperatur: Maximal 140°C
Endsäurezahl: 23,8

## Beispiele 2 - 4

Es wurde wie in Beispiel 1 verfahren, jedoch wurden die 7,45 kg des Umsetzungsprodukts von Trimethylolpropan mit 6 mol Propylenoxid ersetzt durch:

## Beispiel 2

| 6,80 kg | Umsetzungsprodukt von Glycerin mit Propylen- |
|---|---|
| | oxid im Molverhältnis 1 : 6 |
| Endsäurezahl: 25,4 | |

## Beispiel 3

| 5,52 kg | Umsetzungsdrodukt von Glycerin mit Ethylenoxid |
|---|---|
| | im Molverhältnis 1 : 6 |
| Endsäurezahl: 22,9 | |

## Beispiel 4

| 7,30 kg | Umsetzungsprodukt von Trimethylolpropan mit |
|---|---|
| | Caprolacton im Molverhältnis 1 : 3. |
| Endsäurezahl: 24,3 | |

## Vergleichsbeispiel

Zu Vergleichszwecken wurde das folgende als Basis für wasserverdünnbare Alkydharze geeignete Kondensat hergestellt: Beispiel 1 wurde wiederholt, jedoch wurde das Umsetzungsprodukt von Trimethylolpropan mit 6 mol Propylenoxid molmäßig durch Trimethylolpropan ersetzt, das heißt, es wurden insgesamt 2,11 kg Trimethylolpropan verwendet.
Endsäurezahl: 24,9

## Herstellung von Überzügen

Die erfindungsgemäßen Alkydharze wurden in der Wärme mit 4,90 kg einer 50 %igen wässrigen Lösung des Adduktes von 7,5 mol Glycid an 1 mol Nonylphenol als Emulgator und 9,20 kg einer 50 %igen wässrigen Lösung des Adduktes von 2 Mol Glycid an 1 mol 1-Amino-2-methylpropanol vermischt. Anschließend wurden 2,06 kg Wasser zugegeben, so daß eine Alkydharzmikroemulsion mit 85 % Feststoff entstand.

6

**Herstellung eines Weißlackes**

Im Dissolver wurde eine Mehlpaste hergestellt aus (Gewichtsteile):

50 Teile  Alkydharz 85 %ig in Wasser
32 Teile  deionisiertes Wasser
30 Teile  übliche Pigmenthilfsmittel
(9 Teile   einer 30 %igen, säuregruppentragenden,
           niedermolekularen Acrylatdispersion
           (Primal I 94 Rohm & Haas Co.) und
1 Teil   2-Methyl-2-aminopropanol-2-glycid,
         7,5 %ig in Wasser)

183 Teile Titandioxid (Kronos Titan CL 310)
Aufgelackt wurde mit:
309 Teilen Alkydharz 85 %ig in Wasser
131 Teilen Melaminharz (Cymel 301, American Cyanamid Co.)
265 Teilen deionisiertem Wasser
Es wurden 1000 Teile Weißlack mit einem Alkydharz-Melaminharz-Verhältnis 7 : 3 und einer Pigmentvolumenkonzentration von ca. 11 % erhalten.

**Prüfung der Überzüge**

Zur Prüfung der Filme wurden die Lacke auf Stahlbleche gespritzt und 15 Minuten bei 160°C eingebrannt. Die Trockenfilmdicke betrug 40 - 50µm. Die erhaltenen Ergebnisse sind in den Tabellen aufgelistet.

**Tabelle 1**

**Eigenschaften der Lacke**

| Beispiel Nr. | Pendelhärte DIN 53157 | Tiefung mm | Dornbiegetest 2 mm |
|---|---|---|---|
| 1 | 148 | 6,4 | bestanden |
| 2 | 146 | 6,3 | bestanden |
| 3 | 139 | 7,3 | bestanden |
| 4 | 151 | 6,0 | bestanden |
| V 1 | 196 | 2,7 | platzt ab |
| V 2+) | 151 | 3,1 | platzt ab |

+) Vergleichsbeispiel V 2:
Der Lack von Vergleichsbeispiel V 1 wurde statt 15' bei 160°C 20' bei 150°C eingebrannt.

**Tabelle 2**

Schwitzkastentest 40°C
Blasenbeurteilung nach DIN 53 209

# 0 113 800

| Nr./Stunden | 24 | 48 | 120 | 168 | 216 |
|---|---|---|---|---|---|
| 1 | 0 | 0 | 0 | 0 | m1/g1 |
| 2 | 0 | 0 | m1/g1 | 1/3m4/g1 | 1/3m4/g2 |
| 3 | 0 | 0 | m1/g1 | m3/g1 | m4/g2 |
| 4 | 0 | 0 | m2/g1 | m3/g1 | m4/g3 |
| V 1 | 0 | m2/gl | m4/g2 | m5/g3 | m5/g3 |

**Patentansprüche**

für die Vertragsstaaten BE, CH, DE, FR, GB, IT, LI, NL, SE.

1. Alkydharzgemische zur Verwendung in ofentrocknenden Wasserlacken, hergestellt aus mehrwertigen Carbonsäuren bzw. ihren reaktiven Derivaten und mehrwertigen Alkoholen, gewünschtenfalls unter Mitverwendung einwertiger Modifizierungsmittel, dadurch gekennzeichnet, daß sie als mehrwertige Hydroxylverbindungen wenigstens anteilsweise Polyetherpolyole und/oder Polyesterpolyole eines mittleren Molgewichts von 300 bis 800 g/mol enthalten, die mit einer mittleren OH-Funktionalität größer 2 endständige Gruppen der Formel - CHR - OH aufweisen, in der R = - H und/oder - CH$_3$ ist, und daß die Harze eine Säurezahl zwischen 5 und 40 haben.

2. Alkydharze nach Anspruch 1, dadurch gekennzeichnet, daß die Polyetherpolyole und/oder Polyesterpolyole ein Molgewicht zwischen 300 und 600 g/mol aufweisen.

3. Alkydharze nach Anspruch 1 und 2, dadurch gekennzeichnet, daß die Polyetherpolyole und/oder Polyesterpolyole in einer Menge von 5 bis 60 Gew.-%, vorzugsweise 5 bis 25 Gew.-%, bezogen auf Alkydharz, vorliegen.

4. Alkydharze nach den Ansprüchen 1 bis 3, dadurch gekennzeichnet, daß die Polyetherpolyole und/oder Polyesterpolyole vorzugsweise bis zu 4 endständige Gruppen der angegebenen Formel enthalten.

5. Alkydharze nach Anspruch 4, dadurch gekennzeichnet, daß die Polyetherpolyole Umsetzungsprodukte aus der katalytischen Umsetzung von Glycerin, Trimethylolethan, Trimethylolpropan, Di-(trimethylolpropan) oder Pentaerythrit mit Ethylenoxid, Propylenoxid, Butenoxid, Isobutenoxid oder Tetrahydrofuran sind.

6. Alkydharze nach den Ansprüchen 1 bis 4, dadurch gekennzeichnet, daß die Polyesterpolyole Umsetzungsprodukte von Glycerin, Trimethylolethan, Trimethylolpropan oder Pentaerythrit mit Caprolacton sind.

7. Alkydharze nach den Ansprüchen 1 bis 6, dadurch gekennzeichnet, daß sie mit 5 - 40 Gew.-% Fettsäuren, bezogen auf Alkydharz, modifiziert sind.

8. Alkydharze nach den Ansprüchen 1 bis 7, dadurch gekennzeichnet, daß neben oder anstelle der Fettsäuremodifizierung Alkenoxide mit 8 - 20 Kohlenstoffatomen sowie innenständiger und/oder endständiger Epoxidgruppe - vorzugsweise über Dicarbonsäurereste - in das Harz einkondensiert sind.

9. Alkydharze nach den Ansprüchen 1 bis 8, dadurch gekennzeichnet, daß sie eine Säurezahl zwischen 15 und 30, insbesondere 20 - 25 und eine OH-Zahl größer 100 mg KOH/g aufweisen.

10. Alkydharze nach Anspruch 9, dadurch gekennzeichnet, daß sie eine OH-Zahl größer 200 mg KOH/g und eine Säurezahl zwischen 5 und 35 aufweisen und nach einem Verfahren hergestellt worden sind, bei dem zunächst bis zu einer Säurezahl zwischen 40 und 180 kondensiert und anschließend mit Glycid zur gewünschten Säurezahl umgesetzt worden ist.

11. Verwendung der Alkydharze nach den Ansprüchen 1 bis 10 als Bindemittel in ofentrocknenden Wasserlacken.

**Patentansprüche**

für den Vertragsstaat AT.

1. Verfahren zur Herstellung von Alkydharzgemischen zur Verwendung in ofentrocknenden Wasserlacken aus mehrwertigen Carbonsäuren bzw. ihren reaktiven Derivaten und mehrwertigen Alkoholen, gewünschtenfalls unter Mitverwendung einwertiger Modifizierungsmittel, dadurch gekennzeichnet, daß man als mehrwertige Hydroxylverbindungen wenigstens anteilsweise Polyetherpolyole und/oder Polyesterpolyole eines mittleren Molekulargewichts von 300 bis 800 g/mol einsetzt, die mit einer mittleren OH-Funktionalität größer 2 endständige Gruppen der Formel - CHR - OH aufweisen, in der R = H und/oder - CH$_3$ ist, und daß man die Harze auf eine Säurezahl zwischen 5 und 40 einstellt.

2. Verfahren nach Anspruch 1, dadurch gekennzeichnet, daß man Polyetherpolyole und/oder Polyesterpolyole eines Molekulargewichts zwischen 300 und 600 g/mol einsetzt.

8

3. Verfahren nach Anspruch 1, dadurch gekennzeichnet, daß man Polyetherpolyole und/oder Polyesterpolyole in einer Menge von 5 bis 60 Gew.-%, vorzugsweise 5 - 25 Gew.-%, bezogen auf Alkydharz, einsetzt.

4. Verfahren nach den Ansprüchen 1 bis 3, dadurch gekennzeichnet, daß man Polyetherpolyole und/oder Polyesterpolyole vorzugsweise bis zu 4 endständigen Gruppen der angegebenen Formel einsetzt.

5. Verfahren nach den Ansprüchen 1 bis 4, dadurch gekennzeichnet, daß man als Polyetherpolyole Umsetzungsprodukte aus der katalytischen Umsetzung von Glycerin, Trimethylolethan, Trimethylolpropan, Di-(trimethylolpropan) oder Pentaerythrit mit Ethylenoxid, Propylenoxid, Butenoxid, Isobutenoxid oder Tetrahydrofuran einsetzt.

6. Verfahren nach den Ansprüchen 1 bis 5, dadurch gekennzeichnet, daß man als Polyesterpolyole Umsetzungsprodukte von Glycerin, Trimethylolethan, Trimethylolpropan oder Pentaerythrit mit Caprolacton einsetzt.

7. Verfahren nach den Ansprüchen 1 bis 6, dadurch gekennzeichnet, daß man die Alkydharze mit 5 bis 40 Gew.-% Fettsäuren, bezogen auf Alkydharz, modifiziert.

8. Verfahren nach den Ansprüchen 1 bis 7, dadurch gekennzeichnet, daß man neben oder anstelle der Fettsäuremodifizierung Alkenoxide mit 8 bis 20 Kohlenstoffatomen sowie innenständiger und/oder endständiger Epoxidgruppe, vorzugsweise über Dicarbonsäurreste, in das Harz einkondensiert.

9. Verfahren nach den Ansprüchen 1 bis 8, dadurch gekennzeichnet, daß man die Harze auf eine Säurezahl zwischen 15 und 30, insbesondere 20 bis 25 und eine OH-Zahl größer 100 mg KOH/g einstellt.

10. Verfahren nach den Ansprüchen 1 bis 9, dadurch gekennzeichnet, daß die Harze auf eine OH-Zahl größer 200 mg KOH/g und eine Säurezahl zwischen 5 und 35 einstellt, und daß sie nach einem Verfahren hergestellt worden sind, bei dem zunächst bis zu einer Säurezahl zwischen 40 und 180 kondensiert und anschließend mit Glycid zur gewünschten Endsäurezahl umgesetzt worden ist.

11. Verwendung der Alkydharze nach den Ansprüchen 1 - 10 als Bindemittel in ofentrocknenden Wasserlacken.

## Claims

for the Contracting states: BE, CH, DE, FR, GB, IT, LI, NL, SE.

1. Alkyd resin mixtures for use in oven-drying aqueous lacquers, prepared from polybasic carboxylic acids or reactive derivatives thereof and polyhydric alcohols, if desired using monofunctional modifying agents, characterized in that they contain polyether polyols and/or polyester polyols having an average molecular weight of from 300 to 800 g/mol, which for an average OH functionality of greater than 2 contain terminal groups of the formula -CHR-OH, in which R = -H and/or -CH₃, at least partly as the polyfunctional hydroxyl compounds and in that the resins have an acid number of from 5 to 40.

2. Alkyd resins as claimed in Claim 1, characterized in that the polyether polyols and/or polyester polyols have a molecular weight of from 300 to 600 g/mol.

3. Alkyd resins as claimed in Claims 1 and 2, characterized in that the polyether polyols and/or polyester polyols are present in a quantity of from 5 to 60 % by weight and preferably in a quantity of from 5 to 25 % by weight, based on alkyd resin.

4. Alkyd resins as claimed in Claims 1 to 3, characterized in that the polyether polyols and/or polyester polyols preferably contain up to 4 terminal groups corresponding to the above formula.

5. Alkyd resins as claimed in Claim 4, characterized in that the polyether polyols are reaction products from the catalytic reaction of glycerol, trimethylol ethane, trimethylol propane, di-(trimethylolpropane) or pentaerythritol with ethylene oxide, propylene oxide, butene oxide, isobutene oxide or tetrahydrofuran.

6. Alkyd resins as claimed in Claims 1 to 4, characterized in that the polyester polyols are reaction products of glycerol, trimethylol ethane, trimethylol propane or pentaerythritol with caprolactone.

7. Alkyd resins as claimed in Claims 1 to 6, characterized in that they are modified with from 5 to 40 % by weight of fatty acids, based on alkyd resin.

8. Alkyd resins as claimed in Claims 1 to 7, characterized in that, instead of or in addition to the fatty acid modification, $C_8$-$C_{20}$ alkene oxides containing an internal and/or terminal epoxide group are incorporated in the resin by condensation, preferably through dicarboxylic acid residues.

9. Alkyd resins as claimed in Claims 1 to 8, characterized in that they have an acid number of from 15 to 30 and more especially of from 20 to 25 and an OH number of greater than 100 mg KOH/g.

10. Alkyd resins as claimed in Claim 9, characterized in that they have an acid number of greater than 200 mg KOH/g and an acid number of from 5 to 35 and have been produced by a process in which the first step comprises condensation to an acid number of from 40 to 180, followed by reaction with glycidol to the desired acid number.

11. Use of alkyd resins according to claims 1-10 as binders in oven-drying agueous lacquers.

**0 113 800**

## Claims

for the contracting state: AT.

1. A process for the production of alkyd resin mixtures or use in oven-drying aqueous lacquers of polybasic carboxylic acids or reactive derivatives thereof and polyhydric alcohols, if desired using monofunctional modifying agents, characterized in that polyether polyols and/or polyester polyols having an average molecular weight of from 300 to 800 g/mol, which for an average OH functionality of greater than 2 contain terminal groups corresponding to the formula -CHR-OH, in which R = -H and/or -CH$_3$, are at least partly used as the polyfunctional hydroxyl compounds and in that the resins are adjusted to an acid number of from 5 to 40.

2. A process as claimed in Claim 1, characterized in that polyether polyols and/or polyester polyols having a molecular weight of from 300 to 600 g/mol are used.

3. A process as claimed in Claim 1, characterized in that polyether polyols and/or polyester polyols are used in a quantity of from 5 to 60 % by weight and preferably in a quantity of from 5 to 25 % by weight, based on alkyd resin.

4. A process as claimed in Claims 1 to 3, characterized in that polyether polyols and/or polyester polyols preferably containing up to 4 terminal groups corresponding to the above formula are used.

5. A process as claimed in Claims 1 to 4, characterized in that the polyether polyols used are reaction products from the catalytic reaction of glycerol, trimethylol ethane, trimethylol propane, di-(trimethylolpropane) or pentaerythritol with ethylene oxide, propylene oxide, butene oxide, isobutene oxide or tetrahydrofuran.

6. A process as claimed in Claims 1 to 5, characterized in that the polyester polyols used are reaction products of glycerol, trimethylol ethane, trimethylol propane or pentaerythritol with caprolactone.

7. A process as claimed in Claims 1 to 6, characterized in that the alkyd resins are modified with from 5 to 40 % by weight of fatty acids, based on alkyd resin.

8. A process as claimed in Claims 1 to 7, characterized in that, in addition to or instead of the fatty acid modification, C$_8$-C$_{20}$ alkene oxides containing an internal and/or terminal epoxide group are incorporated in the resin by condensation, preferably through dicarboxylic acid residues.

9. A process as claimed in Claims 1 to 8, characterized in that the resins are adjusted to an acid number of from 15 to 30 and more especially of from 20 to 25 and to an OH number of greater than 100 mg KOH/g.

10. A process as claimed in Claims 1 to 9, characterized in that the resins are adjusted to an OH number of greater than 200 mg KOH/g and to an acid number of from 5 to 35 and in that they have been produced by a process in which the first step comprises condensation to an acid number of from 40 to 180, followed by reaction with glycidol to the desired final acid number.

11. Use of alkyd resins according to claims 1-10 as binders in oven-drying aqueous lacquers.

## Revendications

pour les Etats contractants: BE, CH, DE, FR, GB, IT, LI, NL, SE.

1. Mélanges de résines alkydes pour l'emploi dans des vernis à l'eau séchant au four, préparés à partir d'acides carboxyliques polyvalents ou de leurs dérivés réactifs et d'alcools polyvalents, éventuellement avec utilisation conjointe d'agents de modification monovalents, caractérisés en ce qu'ils contiennent comme composés hydroxylés polyvalents tout au moins en partie des polyéther-polyols et/ou des polyester-polyols d'un poids moléculaire moyen de 300 à 800 g/mole qui présentent avec une fonctionnalité OH moyenne supérieure à 2 des groupes terminaux de formule -CHR - OH dans laquelle R = H et/ou CH$_3$, et en ce que les résines possèdent un indice d'acide entre 5 et 40.

2. Résines alkydes selon la revendication 1, caractérisées en ce que les polyéther-polyols et/ou polyester-polyols présentent un poids moléculaire entre 300 et 600 g/mole.

3. Résines alkydes selon les revendications 1 et 2, caractérisées en ce que les polyéther-polyols et/ou polyester-polyols se présentent en une quantité de 5 à 60 % en poids, de préférence de 5 à 25 % en poids par rapport à la résine alkyde.

4. Résines alkydes selon les revendications 1 à 3, caractérisées en ce que les polyéther-polyols et/ou polyester-polyols contiennent de préférence jusqu'à 4 groupes terminaux de formule donnée.

5. Résines alkydes selon la revendication 4, caractérisées en ce que les polyéther-polyols sont des produits de réaction provenant de la réaction catalytique de la glycérine, triméthyloléthane, triméthylolpropane, di-(triméthylolpropane) ou pentaérythritol avec l'oxyde d'éthylène, l'oxyde de propylène, l'oxyde de butène, l'oxyde d'isobutene ou le tétrahydrofuranne.

6. Résines alkydes selon les revendications 1 à 4, caractérisées en ce que les polyester-polyols sont des produits de réaction de la glycérine, triméthyloléthane, triméthylolpropane ou pentaerythritol avec de la caprolactone.

7. Résines alkydes selon les revendications 1 à 6, caractérisées en ce qu'elles sont modifiées avec 5 à 40 % en poids d'acides gras par rapport à la résine alkyde.

10

8. Résines alkydes selon les revendications 1 à 7, caractérisées en ce qu'à côté ou au lieu de la modification par des acides gras sont incorporés dans la résine par condensation des oxydes d'alcoylène ayant 8 à 20 atomes de carbone de même qu'avec groupe époxyde interne et/ou terminal - de préférence par l'intermédiaire de radicaux d'acide dicarboxylique.

9. Résines alkydes selon les revendications 1 à 8, caractérisées en ce qu'elles présentent un indice d'acide entre 15 et 30, en particulier de 20 - 25 et un indice OH supérieur à 100 mg de KOH/g.

10. Résines alkydes selon la revendication 9, caractérisées en ce qu'elles présentent un indice OH supérieur à 200 mg de KOH/g et un indice d'acide entre 5 et 35 et ont été préparées par un procédé dans lequel on condense tout d'abord jusqu'à un indice d'acide entre 40 et 180 et fait ensuite réagir avec du glycidol jusqu'à l'indice d'acide désiré.

11. Utilisation des résines alkydes selon les revendications 1 à 10 comme liants dans des vernis à l'eau séchant au four.


## Revendications

pour l'Etat Contractant: AT.

1. Procédé de préparation de mélanges de résines alkydes pour l'emploi dans des vernis à l'eau séchant au four au départ d'acides carboxyliques polyvalents, ou de leurs dérivés réactifs et d'alcools polyvalents, éventuellement avec utilisation conjointe d'agents de modification monovalents, caractérisé en ce qu'on utilise comme composés hydroxylés polyvalents tout au moins en partie des polyéther-polyols et/ou polyester-polyols d'un poids moléculaire moyen de 300 à 800 g/mole qui présentent avec une fonctionnalité OH moyenne supérieure à 2 des groupes terminaux de formule -CHR-OH dans laquelle R = H et/ou $CH_3$, et en ce qu'on règle les résines à un indice d'acide entre 5 et 40.

2. Procédé selon la revendication 1, caractérisé en ce qu'on utilise des polyéther-polyols et/ou polyols d'un poids moléculaire entre 300 et 600 g/mole.

3. Procédé selon la revendication 1, caractérisé en ce qu'on utilise des polyéther-polyols et/ou polyester/polyols en une quantité de 5 à 60 % en poids, de préférence de 5 à 25 % en poids par rapport à la résine alkyde.

4. Procédé selon les revendications 1 à 3, caractérisé en ce qu'on utilise des polyéther-polyols et/ou polyester-polyols avec de préférence jusqu'à 4 groupes terminaux de formule générale donnée.

5. Procédé selon les revendications 1 à 4, caractérisé en ce qu'on utilise comme polyéther-polyols des produits de réaction provenant de la réaction catalytique de la glycérine, triméthyloléthane, triméthylolpropane, di-(triméthylolpropane) ou pentaérythritol avec de l'oxyde d'éthylène, oxyde de propylène, oxyde de butène, oxyde d'isobutène ou tétrahydrofuranne.

6. Procédé selon les revendications 1 à 5, caractérisé en ce qu'on utilise comme polyester-polyols des produits de réaction de la glycérine, triméthyloléthane, triméthylolpropane ou pentaérythritol avec de la caprolactone.

7. Procédé selon les revendications 1 à 6, caractérisé en ce qu'on modifie les résines alkydes avec 5 à 40 % en poids d'acides gras par rapport à la résine alkyde.

8. Procédé selon les revendications 1 à 7, caractérisé en ce qu'à côté ou au lieu de la modification par des acides gras on incorpore dans la résine par condensation des oxydes d'alcoylène ayant 8 à 20 atomes de carbone de même qu'avec groupe époxyde interne et/ou terminal, de préférence par l'intermédiaire de radicaux d'acide dicarboxylique.

9. Procédé selon les revendications 1 à 8, caractérisé en ce qu'on règle les résines à un indice d'acide entre 15 et 30, en particulier de 20 à 25 et à un indice OH supérieur à 100 mg de KOH/g.

10. Procédé selon les revendications 1 à 9, caractérisé en ce qu'on règle les résines à un indice OH supérieur à 200 mg de KOH/g et à un indice d'acide entre 5 et 35 et en ce qu'elles ont été préparées par un procédé dans lequel on condense tout d'abord jusqu'à un indice d'acide entre 40 et 180 et on fait réagir ensuite avec du glycidol jusqu'à l'indice d'acide final désiré.

11. Utilisation des résines alkydes selon les revendications 1 à 10 comme liants dans des vernis à l'eau séchant au four.